(19) Europäisches Patentamt
European Patent Office
Office européen des brevets

(11) **EP 4 278 934 B1**

(12) **EUROPEAN PATENT SPECIFICATION**

(45) Date of publication and mention
of the grant of the patent:
**24.06.2026 Bulletin 2026/26**

(21) Application number: **23173981.4**

(22) Date of filing: **17.05.2023**

(51) International Patent Classification (IPC):
**A47J 42/38** *(2006.01)* **A47J 42/40** *(2006.01)*

(52) Cooperative Patent Classification (CPC):
**A47J 42/40; A47J 42/38**

(54) **COFFEE BEAN GRINDING APPARATUS**

KAFFEEBOHNENMAHLVORRICHTUNG

APPAREIL DE BROYAGE DE GRAINS DE CAFÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.05.2022 IT 202200010496**

(43) Date of publication of application:
**22.11.2023 Bulletin 2023/47**

(73) Proprietor: **Cimbali Group S.p.A.**
**20082 Binasco (MI) (IT)**

(72) Inventors:
• **Marchesan, Michele**
**Binasco (MI) (IT)**
• **Villa, Ettore**
**Binasco (MI) (IT)**

(74) Representative: **Perani & Partners S.p.A.**
**Corso Europa, 15**
**20122 Milano (IT)**

(56) References cited:
**EP-A1- 3 424 379 WO-A1-01/23095
CN-A- 108 420 331**

## Description

*Technical field*

The present invention develops in the field of coffee bean grinding necessary for the preparation of a coffee-based drink, for example espresso coffee. In particular, the invention relates to a coffee bean grinding apparatus for allowing an accurate measurement of doses of ground coffee. Such an apparatus can be stored inside a coffee machine or in a coffee grinder-doser.

*Background art*

Grinding apparatuses for edible products, and in particular those intended for grinding roasted coffee beans, are increasingly the subject of special attention by operators who require increasingly high precision on the quantity of the ground product. This demand relates to both the grinding apparatuses mounted in independent equipment, such as coffee grinder-dosers outside the coffee machine and the grinding assemblies stored inside a coffee machine. As occurs, for example, for what is known as grinding units which see to providing a portion of ground coffee towards a brewing unit inside or outside the coffee machine.

In the specific case of common independent equipment adapted to grind coffee beans, what are known as coffee grinder-dosers, the ground coffee is conveyed, in most cases, into a stationing conduit, also called a buffer, which is provided with an outlet hole for emitting the coffee powder. Inside the buffer, a volumetric dosing system of the vane type is contained, set in rotation by a cooperating lever with a closing snare. Acting on the lever, a rotary movement is imparted on the snare which from a first closing position passes to a second opening position. Simultaneously, the dosing system is also set in rotation, the movement of which allows a volume of ground coffee to be transported towards the outlet hole of the conduit and the coffee powder to be emitted by gravity into the filter holder below. If the buffer is not sufficiently and evenly filled, the dose-associated grammage is not constant.

The problem is well known to the person skilled in the art which, to partially obviate this disadvantage, has introduced what is known as on-demand equipment characterized in that it dispenses the coffee powder coming from the grinding chamber directly into the filter holder through an emission conduit accommodated on the outlet hole of the grinding chamber. However, experience shows that even this solution is not fully satisfactory. In fact, in may occur that the coffee, due to humidity or due to electrostatic interactions between the metal parts of the grinder and the coffee powder electrically charged during grinding, is not dispensed with a constant flow over time and therefore the final dose received in the brewing unit does not remain constant. Another problem encountered in practice is keeping the dose constant even when the granulometry of the grind corresponding to a certain preparation recipe is varied. This occurs for example when the devices are worn and are no longer capable of ensuring the same granulometry.

It should be noted that the aforesaid problems can also be identified in the case of the grinding apparatus inserted inside the coffee machine.

Some attempts to solve the aforesaid problems, mainly for the case of the coffee grinder-doser, have led to the application of load cells inside equipment adapted to grind coffee beans.

WO 2015006244 A1 discloses a weighing system adapted to detect the weight of a filter holder supported by a support fork lying on a load cell. Specifically, such a system can detect the dose of coffee powder dispensed into the filter holder in real time and keep the coffee grinder-doser activated until the weight detected coincides with that stored.

ES 2574537 A1 instead describes a weighing system in which a floating storage hopper adapted to contain the ground coffee powder lies on a load cell. The storage hopper is provided with a closing plate. As the coffee is placed in the storage hopper, the load cell detects the weight obtained as the difference between the total weight of the storage hopper containing the coffee and the weight of the empty storage hopper.

Another coffee bean grinding apparatus of the prior art is disclosed in EP3424379.

Lastly, document EP 3167782 A1 in which the load cell is housed inside a compartment obtained in the grinder and is adapted to weigh the entire grinder or only the storage hopper containing the coffee beans. The knowledge of the weight of the coffee dispensed is due to the difference between the initial weight of the system and its variation, due to the dispensing of the coffee into an external storage hopper.

*Problems of the Prior Art*

The technical solutions proposed in the known art do not solve the problems related to the accurate measurement of ground coffee both for the case of the coffee grinder-doser and for the coffee machines. Such solutions also have complex structures which increase the risk of failures during the relative use as well as construction and maintenance costs. For example, in WO 2015006244 the support fork does not lie directly on the load cell but cooperates therewith through a series of returns. Such a positioning may result in damage to the load cell during the step of positioning the filter holder on the support fork by the bartender. Instead as regards accuracy, in document ES 2574537 the closing plate of the floating storage hopper opens only when the load cell detects the correct weight of the dose of coffee present therein. However, some of the coffee powder, if it remains in the storage hopper waiting to be dispensed into an external filter holder for a long time, may stick to the walls of the storage hopper due to the oils and electrostatic charge present in the ground coffee and could not be dispensed. In this case the portion of coffee glued to the walls of the storage hopper would then be weighed, but not introduced in an external filter holder. The dose thus received by the filter holder would be lower than that required. Lastly, even partially solving the aforesaid problems requires complex structures that are difficult to adapt to the different cases. An example is EP 3167782 which employs a number of expedients and components so as to improve the measurement of ground coffee. In fact, EP 3167782 needs a special compartment for housing the load cell, increasing the structural complexity thereof, and is capable of detecting the weight strictly with the motor stopped as explicitly stated.

Furthermore, no system of the known art allows an adaptation of the relative grinding apparatus for the correct measurement of the weight of the ground coffee both to coffee grinder-dosers and to coffee machines.

*Object of the Invention*

The object of the present invention is to make a coffee bean grinding apparatus and related method capable of overcoming the drawbacks of the above-mentioned prior art.

In particular, it is an object of the present invention to provide a coffee bean grinding apparatus capable of improving the measurement accuracy of the weight of the ground coffee.

The mentioned technical task and the specified objects are substantially achieved by a coffee bean grinding apparatus and related method comprising the technical features set out in one or more of the appended claims.

BRIEF DESCRIPTION OF THE FIGURES

Further features and advantages of the present invention will become more apparent from the description of an exemplary, but not exclusive, and therefore nonlimiting preferred embodiment of a coffee bean grinding apparatus, as illustrated in the appended figures:

- figure 1 shows a perspective view of a coffee bean grinding apparatus in accordance with an embodiment of the present invention;

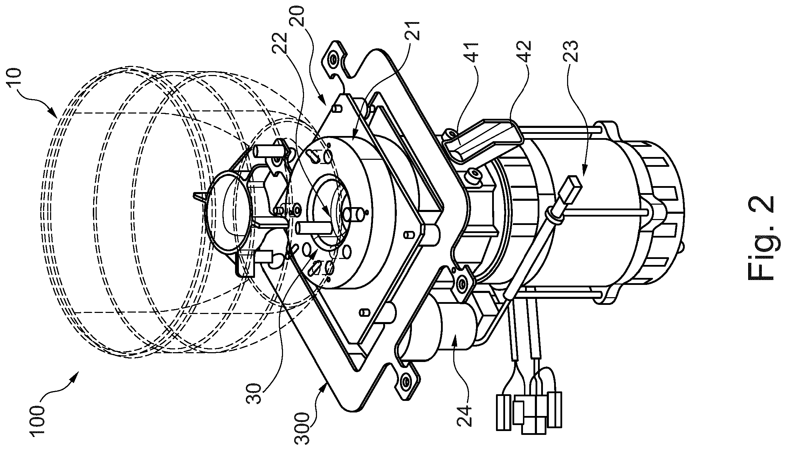

- figure 2 shows a perspective view of the coffee bean grinding apparatus of figure 1 with some parts removed to better show others;
- figure 3 shows a perspective view of a detail of the coffee bean grinding apparatus of figure 1 with some parts removed to better show others;
- figure 4 shows a perspective view of a detail of a weighing apparatus in accordance with an embodiment of the present invention;

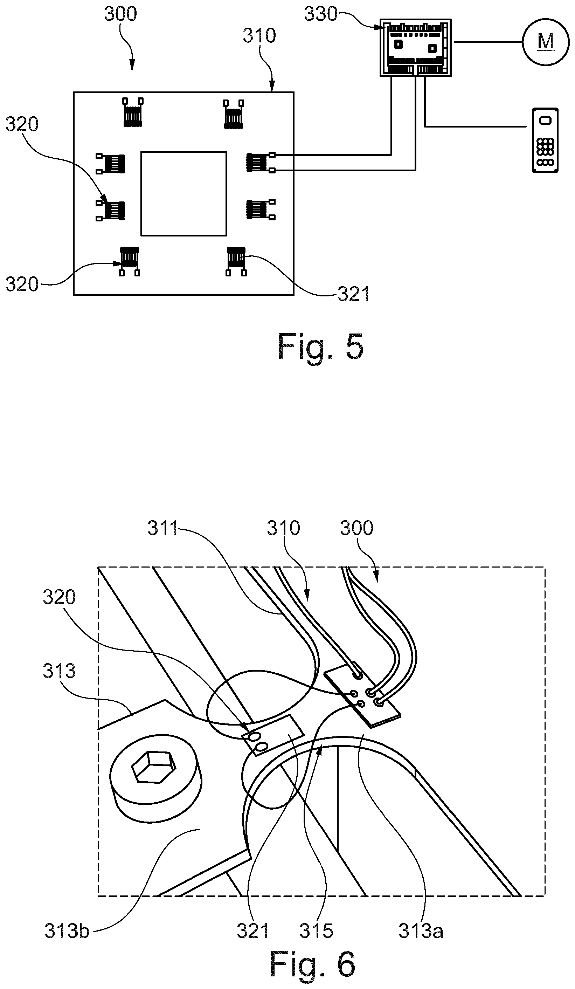

- figure 5 shows a schematic view of a weighing apparatus in accordance with an embodiment of the present invention;
- figure 6 shows an enlargement of a detail of the weighing apparatus in accordance with an embodiment of the present invention;
- figure 7 shows a perspective view of a coffee bean grinding apparatus in accordance with an embodiment of the present invention;

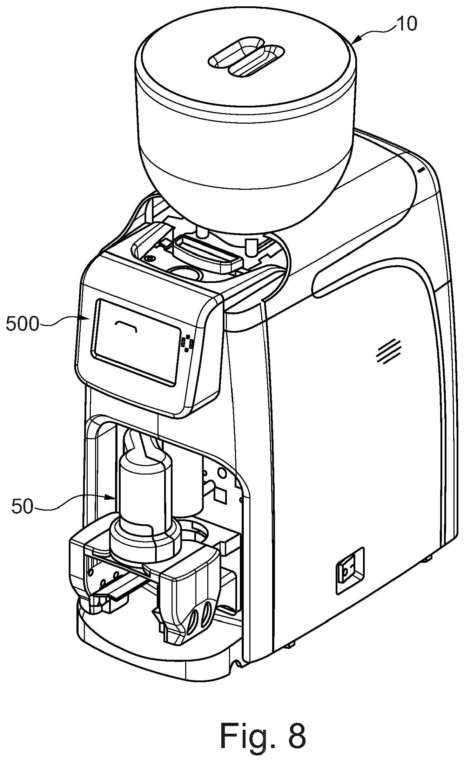

- figure 8 shows a perspective view of a coffee grinder-doser provided with a coffee bean grinding apparatus in accordance with an embodiment of the present invention.

DETAILED DESCRIPTION

Even if not explicitly highlighted, the individual features disclosed with reference to the specific embodiments shall be understood as accessory to and/or interchangeable with other features disclosed with reference to other embodiments.

The object of the present invention is a coffee bean grinding apparatus indicated overall with 1 in the figures. Preferably, the apparatus 1 can be applied both inside a coffee grinder-doser and inside a coffee machine.

The apparatus 1 comprises a grinding assembly 100 configured to grind coffee beans, preferably roasted, to dispense a dose of ground coffee. For example, such ground coffee may be routed directly into a filter holder in the case of integrating the apparatus in a coffee grinder-doser or into a brewing chamber in the case of integrating the apparatus into a coffee machine.

The grinding assembly 100 comprises a storage hopper 10 for storing coffee beans, preferably roasted, for subsequent grinding.

The grinding assembly 100 comprises a grinding device 20 connected to the storage hopper 10 so as to be able to receive the coffee beans to be ground. It should be noted that a direct coupling is preferably provided between the storage hopper 10 and the grinding device 20 in the case of a coffee grinder-doser and by means of an intermediate conduit in the case of a coffee machine.

The grinding device 20 comprises grinding means 30 configured to grind the coffee beans received from the storage hopper 10 and to dispense the ground coffee.

In accordance with a preferred embodiment, illustrated in the figures for the case of a coffee grinder-doser, i.e., with direct connection between grinding device 20 and storage hopper 10, the grinding means 30 comprise a grinding chamber 21 adapted to receive the coffee beans to be ground. Preferably, the grinding means 30 also comprise two or more coffee bean crushing members 22 arranged inside the grinding chamber 21.

It should also be noted that the grinding device 20 comprises a main grinding motor 23 associated to the grinding means 30 and therefore with the crushing members 22 and configured to move the crushing members 22. Specifically, the main grinding motor 23 allows a rotary motion to be imparted to the crushing members 22 for grinding the coffee beans in the grinding chamber 21. Preferably, the grinding device 20 can also comprise a secondary motor 24 configured to adjust the crushing members 22 and control the granulometry of the ground coffee. Specifically, the secondary motor 24 allows to adjust the mutual distance between the crushing members 22.

In accordance with a preferred embodiment, the apparatus 1 can comprise a pressing member 50 configured to press the ground coffee once dispensed from the grinding assembly 100. Preferably, said weighing member 50 can be part of the grinding assembly 100.

The grinding assembly 100 comprises a dispensing conduit 40 configured to dispense, from the grinding assembly 100, the ground coffee from the grinding means 30. Such a dispensing conduit 40 has an inlet opening 41 associated to the grinding chamber 21 and configured to receive ground coffee from the grinding chamber 21. The dispensing conduit 40 further comprises an outlet opening 42 configured to allow the unloading of ground coffee from the dispensing conduit 40 for the dispensing of the ground coffee from the dispensing conduit 40 and from the grinding assembly 100.

In accordance with a preferred embodiment, the grinding assembly 100 provides a stacked arrangement of the storage hopper 10, the grinding device 20 and the dispensing conduit 40, thus having a vertical footprint. It should be noted that the grinding assembly 100 can comprise further components known in the state of the art.

Preferably, the grinding assembly 100 defines a separate unit and has a weight value associated with the coffee contained therein both in the form of beans and in the form of ground coffee, for example retained in inner walls by static electricity and associated with the weight of the individual construction components such as storage hopper 10, grinding device 20 and dispensing conduit 30.

Advantageously, the apparatus according to the present invention allows to detect the weight of the grinding assembly before, after and during the grinding of the coffee beans so as to determine the weight of the coffee dose dispensed by difference. Specifically, the apparatus of the present invention allows to calculate the coffee output from the grinding assembly regardless of any accumulations.

The apparatus 1 comprises a support frame 200 coupled to the grinding assembly 100 to support the grinding assembly 100. Preferably, the grinding assembly 100 is supported on the support frame 200 so that the overall weight of the grinding assembly 100 can be measured. It should be noted that the support frame 200 comprises a base 210 configured to rest on a support, for example, a work surface. If the apparatus 1 is integrated in a coffee grinder-doser, the support frame 200 is also associated to the relative closing body. If the apparatus 1 is instead integrated in a coffee machine, the support frame 200 corresponds to the frame of the coffee machine. The support frame 200 further comprises support shoulders 220 extending along an extension direction X-X perpendicular to a plane associated to the support from the base 210 to shoulder elements 230 adapted to receive the grinding assembly 100. Preferably, the support frame 200 defines an accommodation area 240 between the support shoulders 220 for at least partially accommodating the grinding assembly 100, e.g., the main motor.

In accordance with the embodiment of the present invention, the apparatus 1 comprises a weighing apparatus 300 configured to measure the weight of the ground coffee dispensed from the grinding assembly 100. Such a weighing apparatus 300 allows to detect the overall weight of the grinding assembly 100 at successive time instants so as to execute a difference between the weights detected at successive time instants and determine the weight of the ground coffee actually dispensed. It should be noted that the weighing apparatus 300 is configured to neglect its weight during operation. Specifically, the weighing apparatus 300 is calibrated to weigh the grinding assembly 100.

The weighing apparatus 300 comprises a weighing body 310 configured to connect the grinding assembly 100 to the support frame 200 by suspending the grinding assembly 100. Such a weighing body 310 defines a support base for the grinding assembly 100 so as to support the weight of the grinding assembly 100 and discharge it on the support frame 200. Specifically, the weighing body 310 is configured to support the grinding assembly 100 on the support frame 200. In accordance with a preferred embodiment, the weighing body 300 is associated to the support shoulders 220 of the support frame 200 at the support elements 230.

Preferably, the weighing body 310 is interposed between the grinding assembly 100 and the support frame 200. Thereby, the weighing body 300 allows the weight associated to the grinding assembly 100 to be received and discharged onto the support frame 200. If the apparatus 1 is integrated in the coffee grinder-doser, the apparatus 1 substantially defines the coffee grinder-doser with the addition of the closing body. If it is integrated in a coffee machine, the weighing apparatus 300 can be arranged on the support frame 200 of the coffee machine for weighing the related grinding assembly 100. In the latter case, the weighing apparatus 300 with the grinding assembly 100 and the support frame 200 of the coffee machine substantially defines the apparatus 1 of the present invention with the necessary adaptations.

In accordance with a preferred embodiment, the weighing body 310 comprises support elements 311 defining a supporting perimeter 312 to hold the grinding assembly 100 to the support frame 200 and coupling elements 313 configured for connecting the support elements 311 to the support frame 200.

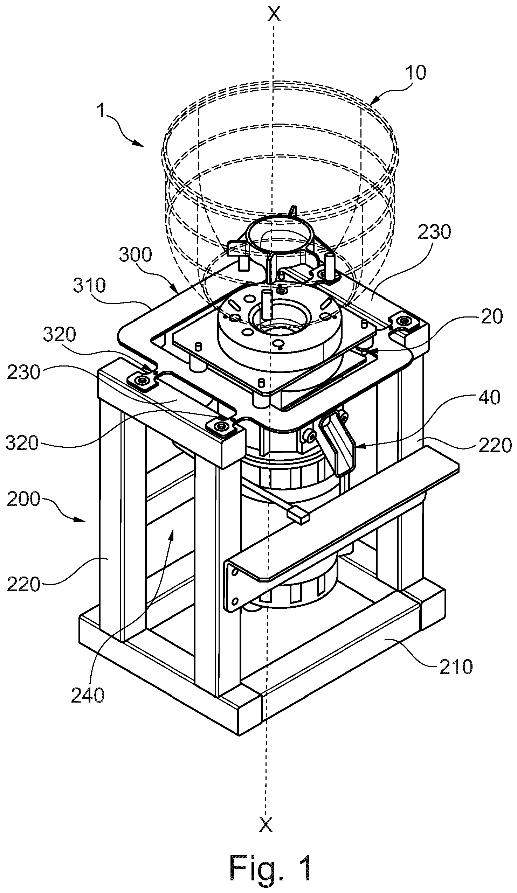

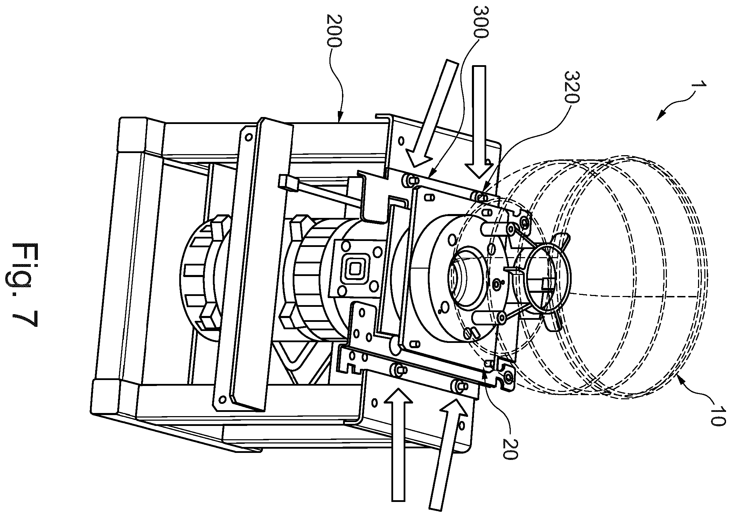

It should be noted that the supporting perimeter defines the support base for supporting the grinding assembly 100. Preferably, the support elements 311 support the grinding assembly 100 in an intermediate position of the related vertical footprint. Specifically, as illustrated in figures 1 and 7, the grinding assembly extends from opposite parts with respect to the support elements 311 along the extension direction X-X. In alternative embodiments, the grinding assembly 100 can have a different, but still sustainable, footprint from the weighing body 310 so as to discharge the entire weight of the grinding assembly 100 on the weighing body 310.

More preferably, the support elements 311 define a support plate 314, for example in a single piece. Such a support plate 314 can have a supporting perimeter 312 of different geometric shapes, for example, rectangular or of any other shape suitable for the proper storage inside the grinding apparatus for the case of a coffee grinder-doser and coffee machine. In the present embodiment, coupling elements 313 project, respectively from the support plate 314 for fixing to the support frame 200. Specifically, the support plate 314 defines the support base for the grinding assembly 100 by means of the perimeter. In the case of a vertical extension of the grinding assembly 100, the supporting plate 314 can comprise a passage opening 317 configured to partly receive the grinding assembly 100 to be distributed from opposite parts of the support plate 314 along the extension direction X-X.

In accordance with a preferred embodiment, the coupling elements 313 project away from the support elements 311 along a distancing direction Y-Y perpendicular to the extension direction X-X. In the case of the support plate 314, such coupling elements 313 project away from the support plate 314 along a distancing direction Y-Y.

Preferably, each coupling element 313 extends from a first end 313a associated to the related support element 311 or the plate 314 to a second end 313b for fixing the support element 311 or the support plate 314 to the support frame 200. It should be noted that such coupling elements 313 are distributed along the supporting perimeter 312 for the fixing to the support elements 230 of the support frame 200.

In accordance with a preferred embodiment, the apparatus 1 comprises a connecting plate 400 interposed between the grinding assembly 100 and the weighing body 300. Specifically, the connecting plate 400 is fixed to the grinding assembly 100 and is configured to connect the grinding assembly 100 to the weighing body 300. Preferably, the connecting plate 400 defines a junction element between the components of the grinding assembly 100 favouring the distribution of weight on the weighing body 310. In detail, the connecting plate 400 is configured to concentrate the weight force of the grinding assembly 100 on the weighing body 310.

Preferably, the connecting plate 400 comprises connection means 410 configured to enable the removable attachment of the connecting plate 400 to the weighing body 300. Such connecting means 410 can comprise threaded members such as bolts. Furthermore, the connection means 410 can also comprise damping elements 420 interposed between the connecting plate 400 and the weighing body 310.

The weighing apparatus 300 comprises weight detection sensors 320 associated to the weighing body 310 and configured to generate measurement signals representative of the weight of the grinding assembly 100 at successive time intervals. Such weight detection sensors 320 thus allow the measurement of the overall weight of the grinding assembly 100 lying on the weighing body 310. It should be noted that the weight detection sensors 320 are arranged on the weighing body 310 so as to measure the actual weight of the grinding assembly 100.

Preferably, the weight detection sensors 320 are associated to the support elements 311 and/or the coupling elements 313. Specifically, the weight detection sensors 320 are distributed on the support elements 311 and/or on the coupling elements 313.

More preferably, the weight detection sensors 320 are arranged between the first end 313a and the second end 313b of one or more coupling elements 313. By virtue of such an arrangement, the weight detection sensors are capable of correctly measuring the weight of the grinding assembly 100.

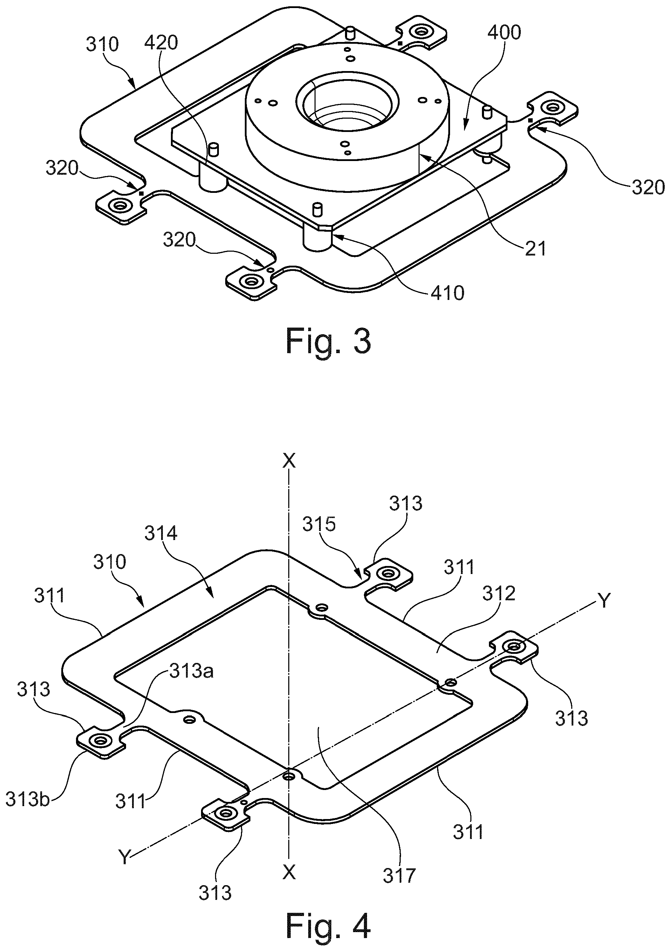

In accordance with a preferred embodiment, each coupling element 313 has a narrowing 315 between the first end 313a and the second end 313b where the weight detection sensors 320 are arranged, for example as illustrated in figures 1 and 3. Such a narrowing 315 can exhibit as a tapering of the coupling element 313 starting from both the first end 313a and the second end 313b towards the respective opposite end.

It should be noted that it is thereby possible to improve the sensitivity and accuracy in measuring the weight of the grinding assembly 100.

In accordance with a preferred embodiment, the weight detection sensors 320 comprise strain gauges 321. Preferably, the weighing apparatus 300 has four coupling elements 313 and comprises one or more strain gauges 321 preferably each associated to at least one coupling element 313 at the narrowing 315. More preferably, the weighing apparatus 300 comprises at least two strain gauges 321. Still more preferably, the weighing apparatus 300 comprises at least four strain gauges 321, associating one strain gauge to each coupling element 313 at the narrowing 315. Alternatively, the weighing apparatus 300 comprises at least eight strain gauges 321, associating a pair of strain gauges for each coupling element 313 at the narrowing 315.

The weighing apparatus 300 comprises an electronic control unit 330 in signal communication with the weight detection sensors 320 for receiving the measurement signals and calculating a weight signal representative of the weight of the ground coffee dispensed from the grinding assembly 100 based on the measurement signals received. Preferably, the electronic control board 330 cooperates with the weight detection sensors 320 to detect the weight of the grinding assembly 100 and the dispensed coffee. In accordance with a preferred embodiment, the weight detection sensors 320 are in wired communication with the electronic control unit 330.

Preferably, the electronic control unit 330 can be in signal communication with the grinding assembly 100 for controlling the grinding device 20. Specifically, the control unit 330 is configured to control the grinding parameters of the grinding device 20 based on the dispensing of the desired coffee dose. For example, once a dispensing input has been received from, for example, a user interface 500, the electronic control unit 330 activates the grinding means 30 and grinds the coffee beans received from the storage hopper 10. The dispensing of the coffee brings a change in the weight of the grinding assembly 100. Such a variation is detectable by the weighing apparatus 300 to calculate the weight of the coffee dispensed by difference.

The grinding parameters can be for example motor speed, grinding time, number of motor revolutions, weight of the dispensed dose and/or pressing value if a pressing member is present.

More preferably, the weighing apparatus 300 can comprise a user interface 500 in signal communication with the electronic control unit 330. Such a user interface 500, for example in the form of a screen and related push-button panel, is configured to allow the control of the grinding based on the desired dispensing, the setting of grinding parameters and maintenance.

If the grinding apparatus 1 is contained inside a coffee machine, the electronic control board 330 can be the same control unit which electrically manages the coffee machine while the support frame and the user interface are already those present in the coffee machine.

In accordance with a preferred embodiment, the electronic control unit 330 is configured to calculate the weight of the ground coffee dispensed from the grinding assembly 100 by calculating the difference between two measurement signals associated to successive time intervals. Specifically, the electronic control unit 330 allows to detect the weight of the grinding assembly 100, generating a related measurement signal, for example, before the activation of the grinding assembly 100. It is thereby possible to obtain an initial weight value. Subsequently, the control unit 330 allows to detect the weight of the grinding assembly 100 at successive time instants following the activation of the grinding assembly 100. This allows the weight variation of the grinding assembly 100 to be monitored based on the ground coffee leaving the grinding assembly 100 for dispensing. Finally, by difference, the electronic control unit 330 allows the measurement of the weight of the ground coffee dispensed.

Preferably, as anticipated, the electronic control unit 330 is also configured to control the grinding based on inputs received from the user interface 500 and based on the detected weight of the dispensed ground coffee as well as in an automated manner.

In a further preferred embodiment, the weighing apparatus 300 can comprise an auxiliary support plate interposed between the weighing body 310 and the support frame 200 for fixing the weighing body 310 to the support frame. It should be noted that what has been described above in relation to the coupling between the weighing body 310 and the support frame 200 is applicable to the coupling between the weighing body 310 and the support plate as if it were part of the support frame 200.

A further object of the present invention is a method for dispensing a dose of ground coffee from the coffee bean grinding apparatus 1 described above.

The method comprises the step of detecting the weight of the grinding assembly 100 using the weighing apparatus 300 and generating a first measurement signal representative of the weight of the grinding assembly 100 before activation of the grinding means 100. It is thereby possible to obtain the starting weight for the grinding assembly.

The method comprises the step of activating the grinding means 30 to dispense a dose of ground coffee from the grinding assembly. Such an activation can be preceded by a step of setting the grinding parameters, for example from the user interface 500, selecting a dose of coffee to be dispensed and activation input of the grinding means 30.

The method comprises a step of detecting the weight of the grinding assembly 100 using the weighing apparatus and generating a second measurement signal representative of the weight of the grinding assembly 100 based on the ground coffee dispensed. Specifically, the present detection step is carried out following the stoppage of the grinding means 30 or during the operation of the grinding means 30. It is thereby possible to monitor the variation in weight of the grinding assembly 100 based on the dispensing.

The method comprises a step of calculating the weight of the dose of ground coffee based on the difference between the first measurement signal and the second measurement signal. The calculating step therefore involves neglecting any surplus ground coffee or beans present in the grinding assembly 100 for the calculation of the dispensed ground coffee.

Four types of operation of the method based on the type of control carried out on the grinding means 30 are described below. Such embodiments can be alternative but also combinable.

In accordance with a first embodiment of the method, the step of activating the grinding means 30 is a function of an operating time duration of the grinding means 30 and provides for stoppage of the grinding means 30 as a function of the operating time duration. Specifically, the activation means 30 are activated for a time duration to dispense a certain amount of ground coffee. After stopping the grinding means 30, the method comprises detecting the weight of the grinding assembly 100 and subsequently calculating the weight of the coffee dispensed. The present embodiment provides that the calculation step comprises a step of calculating a productivity value for each dispensed dose of ground coffee as the ratio of the weight of the dose of ground coffee to the operating time duration. The productivity value represents the grams per second of coffee dispensed for a dispensed dose. Preferably, the step of calculating the productivity provides storing the calculated productivity values in a memory unit associated to the electronic control unit 330. In accordance with the present embodiment, the method comprises a step of controlling the ground coffee dispensed. Such a control step comprises a step a) of calculating a median value of productivity Mc of the calculated productivity values. Preferably step a) is carried out after a predefined number of dispensed doses, for example 10. Subsequently, the control step comprises the step b) of comparing the median value of productivity Mc with a default value of productivity Mp. For example, the default productivity value Mp is stored in the memory device. Following the comparison, the control method comprises the step c) of generating a control signal of the grinding means 30 if the median value of productivity Mc differs from the value of the default value of productivity Mp and falls within a first control interval I1 associated with the default value of productivity Mp and a first error value E1. Specifically, step b) involves comparing the median productivity value Mc with the interval I1:

$$Mp - E1 < Mc < Mp + E1$$

Where E1 can be a value between 0.1 and 0.5gr/sec. Thereby, the comparison step allows to verify the deviation of the median productivity value Mc from the default productivity value Mp and whether this falls within the first interval I1. Subsequently, step c) as a function of the comparison generates the control signal of the grinding means 30. The method comprises a step d) of generating a control signal of the grinding apparatus 1 if the median value of productivity Mc leaves the first interval I1 and falls within a second control interval I2 associated with the default value of productivity Mp and a second error value E2 greater than the first error value E1. Specifically, step b) also provides for comparing the median productivity value Mc with the interval I2:

$$Mp - E2 < Mc < Mp + E2$$

Where E2 can be a value between 0.8 and 1.2 g/sec, preferably 1 g/sec. Thereby, as before, the comparison step allows to verify the deviation of the median productivity value Mc from the default productivity value Mp and whether this falls within the second control interval I2. Subsequently, step d) as a function of the comparison generates the control signal of the grinding apparatus 1. Lastly, the control step comprises step e) of modifying grinding parameters of the grinding means 30 as a function of the control signal of the grinding means 30 and monitoring the grinding apparatus 1 as a function of the control signal of the grinding apparatus 1. It should be noted that the control signals can be sent to the user interface 500 to modify one or more grinding parameters and to act on the grinding apparatus 1.

Preferably, step e) in relation to the grinding means control signal comprises a step of confirming the modification of the grinding parameters by the user or in an automated manner. Subsequently step e) comprises a step of modifying the grinding parameters as a function of the control signal of the grinding means 30 to obtain a median productivity value Mc equal to the default productivity value Mp. In the automated case, step e) provides a presetting step by the user to associate decreasing priority values with the grinding parameters. Specifically, the priority value corresponds to the order in which the electronic control unit 330 modifies the relative grinding parameter. Subsequently, step e) comprises a step of modifying a grinding parameter as a function of the priority and presence of the control signal of the grinding means 30. After such modification, step e) comprises a step of repeating steps a)-d) to verify the presence or absence of the controls signal of the grinding means 30 and possibly modifying a further grinding parameter. Preferably, step e) involves repeating the cycle of modifications until obtaining a median productivity value Mc equal to the default productivity value Mp.

In relation to the control signal of the grinding apparatus 1, step e) envisages sending a message or an alarm signal to the user interface 500 so that the user can act on the grinding apparatus 1. Specifically, the control signal of the grinding apparatus 1 allows to monitor the apparatus 1 so as to verify the need for specific maintenance actions, for example, to suggest delaying the grinding device, to clean the coffee powder emission conduits, to clean the grinding chamber or to request the intervention of a qualified technician.

In accordance with a second embodiment of the method, the step of activating the grinding means 30 is a function of an activation time duration of the grinding means 30 for dispensing a specific dose of ground coffee associated with a reference weight value Pr. Specifically, the activation means 30 are activated for a specific activation time duration Tr for dispensing the determined dose of coffee having a default weight value Pp. In other words, the activation means 30 in the activation step remain active for the activation duration Tr. Once the grinding means 30 have stopped, the method involves detecting the weight of the grinding assembly 100 and then calculating the weight of the coffee dispensed. The present embodiment envisages storing the calculated weight for each dispensed dose in a memory unit associated to the electronic control unit 330. In accordance with the present embodiment, the method comprises a step of controlling the ground coffee dispensed. Such a control step comprises a step a) of calculating a median weight value Pc of the calculated weight values. Preferably step a) is carried out after a predefined number of dispensed doses, for example 5 or 10. Subsequently, the control step comprises the step b) of comparing the median weight value Pc with a default weight value Pp. For example, the default weight value Pp is stored in the memory device. Following the comparison, the control method comprises the step c) of generating a control signal of the grinding means 30 if the median weight value Pc differs from the value of the default weight value Pp and falls within a first control interval I1 associated with the default weight value Pp and a first error value E1. Specifically, step b) involves comparing the median weight value Pc with the interval I1:

$$Pp - E1 < Pc < Pp + E1$$

Where E1 can be a value between 0.1 and 0.5 gr. Thereby, the comparison step allows to verify the deviation of the median weight value Mc from the default weight value Pp and whether this falls within the first interval I1. Subsequently, step c) as a function of the comparison generates the control signal of the grinding means 30. The method comprises a step d) of generating a control signal of the grinding apparatus if the median weight value Pc leaves the first interval I1 and falls within a second control interval I2 associated with the default weight value Pp and a second error value E2 greater than the first error value E1. Specifically, step b) also provides for comparing the median weight value Pc with the interval I2:

$$Pp - E2 < Pc < Pp + E2$$

Where E2 can be a value between 0.8 and 1.2 gr, preferably 1 gr. Thereby, as before, the comparison step allows to verify the deviation of the median weight value Pc from the default weight value Pp and whether this falls within the second control interval I2. Subsequently, step d) as a function of the comparison generates the control signal of the grinding apparatus 1. Lastly, the control step comprises step e) of modifying grinding parameters of the grinding means 30 as a function of the control signal of the grinding means 30 and monitoring the grinding apparatus 1 as a function of the control signal of the grinding apparatus 1. It should be noted that the control signals can be sent to the user interface 500 to modify one or more grinding parameters and to act on the grinding apparatus 1.

Preferably, step e) is carried out in accordance with the first embodiment of the method with the aim of obtaining, however, a median weight value Pc equal to the default weight value Pp.

In accordance with a third embodiment of the method, the step of activating the grinding means 30 is a function of the weight of the dose of ground coffee dispensed and provides for an activation time of the grinding means 30 for each dispensed dose extended temporally between a start time instant associated with activating the grinding means 30 and an end time instant associated with stopping the grinding means 30. Specifically, the activation means 30 are activated until a certain amount of ground coffee is dispensed. The present embodiment envisages that the calculation step dynamically calculates and continues the weight of the coffee dispensed during the activation period of the grinding means 30, determining the relative stopping upon reaching the default weight of the coffee dose to be dispensed. Specifically, the calculation step comprises the step of correcting the calculation of the weight of the dose of coffee by means of a correction algorithm based on harmonic analysis associated with the grinding means 30 and the weighing unit 300. Specifically, the algorithm residing in a memory unit of the electronic control unit 330 is configured to filter the measurement signals by acting on the dominant harmonics determined by the vibratory motion of the grinding means 30 and which interfere and overlap with those determined by the weight force of the grinding assembly 100. Advantageously, it is possible to calculate the weight during the operation of the grinding means 30. Subsequently, the calculating step comprises the step of continuously comparing the calculated weight values to a reference weight value Pp which is associated with the dispensing. Such a comparison allows to determine the duration of activation of the grinding means. In fact, the calculation step comprises the step of generating a stop signal of the grinding means 30 if the calculated weight is equal to the default weight Pp. Such a stop signal allows the electronic control unit 330 to stop the grinding means once the weight of the desired ground coffee dose is reached. Lastly, the calculation step comprises the step of storing, preferably in a memory unit of the electronic control unit 330, the activation time of the grinding means 30 for each dispensing. Such an activation time is calculated from the activation time instant to the time instant when the stop signal stops the grinding means 30. In accordance with the present embodiment, the method comprises a step of controlling the ground coffee dispensed. Such a control step comprises a step a) of calculating a median time value Tc of the stored activation time values. Preferably step a) is carried out after a predefined number of dispensed doses, for example 5 or 10. Subsequently, the control step comprises the step b) of comparing the median time value Tc to a default time value Tp associated with the dispensing of the dose of ground coffee having the default weight Pp. Specifically, the default time value Tp is representative of the time required for the grinding assembly 100 to dispense the dose of ground coffee associated with the default weight value Pp. For example, the default time value Tp is stored in the memory device. Following the comparison, the control method comprises the step c) of generating a control signal of the grinding means 30 if the median time value Tc differs from the value of the default time value Tp and falls within a first control interval I1 associated with the default time value Tp and a first error value E1. Specifically, step b) involves comparing the median time value Tc with the interval I1:

$$Tp - E1 < Tc < Tp + E1$$

Where E1 can be a value between 0.1 and 0.5 sec. Thereby, the comparison step allows to verify the deviation of the median time value Tc from the default time value Tp and whether this falls within the first interval I1. Subsequently, step c) as a function of the comparison generates the control signal of the grinding means 30. The method comprises a step d) of generating a control signal of the grinding apparatus 1 if the median time value Tc leaves the first interval I1 and falls within a second control interval I2 associated with the default time value Pp and a second error value E2 greater than the first error value E1. Specifically, step b) also involves comparing the median time value Tc with the interval I2:

$$Tp - E2 < Tc < Tp + E2$$

Where E2 can be a value between 0.8 and 1.2 sec, preferably 1 sec. Thereby, as before, the comparison step allows to verify the deviation of the median time value Tc from the default time value Tc for dispensing a same dose quantity. Subsequently, step d) as a function of the comparison generates the control signal of the grinding apparatus 1. Lastly, the control step comprises step e) of modifying grinding parameters of the grinding means 30 as a function of the control signal of the grinding means 30 and monitoring the grinding apparatus 1 as a function of the control signal of the grinding apparatus 1. It should be noted that the control signals can be sent to the user interface 500 to modify one or more grinding parameters and to act on the grinding apparatus 1.

Preferably, step e) is carried out in accordance with the first embodiment of the method with the aim of obtaining, however, a median value of Tc equal to the default time value Tp for dispensing a dose of ground coffee having a predefined weight.

In accordance with a fourth embodiment of the method, the step of activating the grinding means 30 is a function of the weight of the dose of ground coffee dispensed and provides a number of motor rpm for each dispensing. Specifically, the activation means 30 are activated until a certain amount of ground coffee is dispensed. During the activation period, the number of motor rpm made by the grinding means 30 are measured, preferably by means of encoders. The present embodiment envisages that the calculation step dynamically calculates and continues the weight of the coffee dispensed during the activation of the grinding means 30, determining the relative stopping upon reaching the default weight of the coffee dose to be dispensed. Specifically, the calculation step comprises the step of correcting the calculation of the weight of the coffee dose by means of a correction algorithm based on harmonic analysis associated with the grinding means 30 and the weighing unit 300, as in the third embodiment of the method. Subsequently, the calculating step comprises the step of continuously comparing the calculated weight values to a reference weight value Pp which is associated with the dispensing. Such a comparison allows the number of motor rpm to be determined. In fact, the calculation step comprises the step of generating a stop signal of the grinding means 30 if the calculated weight is equal to the default weight Pp. Such a stop signal allows the electronic control unit 330 to stop the grinding means once the weight of the desired ground coffee dose is reached. Lastly, the calculation step comprises the step of storing, preferably in a memory unit of the electronic control unit 330, the number of motor rpm for each dispensing. Such a number of motor rpm is calculated from the activation time instant to the time instant when the stop signal stops the grinding means 30. In accordance with the present embodiment, the method comprises a step of controlling the ground coffee dispensed. Such a control step provides the same steps as the third embodiment of the method in which the activation time is replaced with the number of motor rpm. Specifically, the present embodiment of the method allows a median value of the number of motor rpm Nc of the stored number of motor rpm to be calculated. Such a median value is then compared with a default motor rpm value Np associated with the dispensing of the dose of ground coffee having the default weight Pp. The method thereby provides for the generation of control signals of the grinding means 30 and control signals of the grinding apparatus 1. Therefore, as before, step e) is carried out in accordance with the first embodiment of the method with the aim of obtaining, however, a median motor rpm value Nc equal to the default motor rpm value Np for the dispensing of the same dose of ground coffee.

A weighing kit comprising the above-described weighing apparatus 300 is further an object of the present invention. Such a kit is applicable to apparatuses for grinding coffee beans integrated in coffee grinder-dosers or coffee machines.

**Claims**

1. A coffee bean grinding apparatus (1) comprising:

   - a grinding assembly (100), comprising:

       - a storage hopper (10) configured to store coffee beans;
       - a grinding device (20) connected to the storage hopper (10) and comprising grinding means (30) configured to grind coffee beans received from the storage hopper (10) and to dispense ground coffee;
       - a dispensing conduit (40) configured to dispense the ground coffee from the grinding assembly (100);

- a support frame (200) coupled to the grinding assembly (100) to support the grinding assembly (100);
- a weighing apparatus (300) configured to measure the weight of the ground coffee dispensed from the grinding assembly (100) and comprising:

- a weighing body (310);
- weight detection sensors (320) associated to the weighing body (310);
- an electronic control unit (330) in signal communication with the weight detection sensors (320) for receiving the measurement signals and calculating a weight signal representative of the weight of the ground coffee dispensed from the grinding assembly (100) as a function the measurement signals received

**characterized in that:**

- the weighing body (310) is configured to connect the grinding assembly (100) to the support frame (200) by suspending the grinding assembly (100);
- the weight detection sensors (320) are configured to generate measurement signals representative of the weight of the grinding assembly (100) at successive time intervals.

2. The coffee bean grinding apparatus (1) according to claim 1, wherein the weighing device (300) is interposed between the grinding assembly (100) and the support frame (200).

3. The coffee bean grinding apparatus (1) according to claim 1 or 2, wherein the weighing body (310) comprises:

- supporting elements (311) defining a supporting perimeter (312) to hold the grinding assembly (100) to the support frame (200);
- coupling elements (313) configured for connecting the support elements (311) to the support frame (200), said weight detection sensors (320) being associated with the support elements (311) and/or the coupling elements (313).

4. The coffee bean grinding apparatus (1) according to claim 3, wherein the support elements (311) define a support plate (314), said coupling elements (313) respectively protruding from the support plate (314) for attachment to the support frame (200).

5. The coffee bean grinding apparatus (1) according to claim 3 or 4, wherein the coupling elements (313) protrude from the support elements (311), each coupling element (313) extending from a first end (313a) associated with the relative support element (311) to a second end (313b) for fixing the support element (311) to the support frame (200), said weight detection sensors (320) being arranged between the first end (313a) and the second end (313b) of one or more coupling elements (313).

6. The coffee bean grinding apparatus (1) according to claim 5, wherein each coupling element (313) exhibits a narrowing (315) between the first end (313a) and the second end (313b), said weight detection sensors (320) being arranged at the narrowing (315).

7. The coffee bean grinding apparatus (1) according to any one of claims 1 to 6, wherein the coffee bean grinding apparatus (1) comprises a connecting plate (400) interposed between the grinding assembly (100) and the weighing body (300), said connecting plate (400) being fixed to the grinding assembly (100) and configured to connect the grinding assembly (100) to the weighing body (300).

8. The coffee bean grinding apparatus (1) according to claim 7, wherein the connection plate (400) comprises connection means (410) configured to removably attach the connection plate (400) to the weighing body (300).

9. The coffee bean grinding apparatus (1) according to any one of claims 1 to 7, wherein the weight detection sensors (320) comprise strain gauges (321).

10. The coffee bean grinding apparatus (1) according to any one of claims 1 to 9, wherein the electronic control unit (330) is configured to calculate the weight of the ground coffee dispensed from the grinding assembly (100) by calculating the difference between two measurement signals associated with successive time intervals.

11. Method for dispensing a dose of ground coffee from the coffee bean grinding apparatus (1) according to any one of claims 1 to 10, the method comprising the steps of:

- detecting the weight of the grinding assembly (100) using the weighing apparatus and generating a first measurement signal representative of the weight of the grinding assembly (100) before activation of the grinding means (30);
- activating the grinding means (30) to dispense a dose of ground coffee from the grinding assembly (100);
- detecting the weight of the grinding assembly (100) using the weighing apparatus and generating a second measurement signal representative of the weight of the grinding assembly (100) based on the ground coffee dispensed;
- calculating the weight of the dose of ground coffee based on the difference between the first measurement signal and the second measurement signal.

12. Method for dispensing a dose of ground coffee according to claim 11, wherein:

- the step of activating the grinding means (30) is a function of the operating time duration of the grinding means (30) and provides for stoppage of the grinding means (30) as a function of the operating time duration;
- the step of calculating the weight of the dose of ground coffee includes the step of calculating a productivity value for each dispensed dose of ground coffee as the ratio of the weight of the dose of ground coffee to the operating time duration.

13. Method for dispensing a dose of ground coffee according to claim 12, wherein the method comprises a step of controlling the dispensed ground coffee, the controlling step comprising the steps of:

a) calculating a median value of productivity (Mc) of the calculated productivity value;
b) comparing the median value of productivity (Mc) with a default value of productivity (Mp);
c) generating a control signal of the grinding element (30) if the median value of productivity (Mc) differs from the default value of productivity (Mp) and falls within a first control range (I1) associated with the default value of productivity (Mp) and a first error value (E1);
d) generating a control signal of the grinding apparatus (1) if the median value of productivity (Mc) exits the first interval (I1) and falls within a second control interval (I2) associated with the default value of productivity (Mp) and a second error value (E2) greater than the first error value (E1);
e) modifying grinding parameters of the grinding element (30) according to the control signal of the grinding means (30) and monitoring the grinding apparatus (1) according to the control signal of the grinding apparatus (1).

14. Method for dispensing a dose of ground coffee according to claim 11, wherein:

- the step of activating the grinding means (30) is based on an activation time duration of the grinding means (30) to dispense a specific dose of ground coffee associated with a reference weight value (Pp), said phase of activating the grinding means (30) providing to switch off the grinding means according to the activation time duration.

15. Method for dispensing a dose of ground coffee according to claim 14, wherein the method comprises a step of controlling the dispensed ground coffee, the controlling step comprising the steps of:

a) calculating a median weight value (Pc) of the weight values calculated;
b) comparing the median weight value (Pc) with the reference weight value (Pp);
c) generating a control signal of the grinding means (30) if the median weight value (Pc) differs from the reference weight value (Pp) and falls within a first control range (I1) associated with the reference weight value (Pp) and a first error value (E1);
d) generating a control signal of the grinding apparatus (1) if the median weight value (Pc) exits the first control interval (I1) and falls within a second control interval (I2) associated with the reference weight value (Pp) and a second error value (E2) greater than the first error value (E1);
e) modifying grinding parameters of the grinding element (30) based on the control signal of the grinding means (30) and monitoring the grinding mill (1) based on the control signal of the grinding apparatus (1).

16. Method for dispensing a dose of ground coffee according to claim 11, wherein:

- the step of activating the grinding means (30) is based on the weight of the dispensed dose of ground coffee and provides for an activation time of the grinding means for each dispensed dose of coffee extended temporally between a start time instant associated with activating the grinding means and an end time instant associated with stopping the grinding means (30);
- the step of calculating the weight of the dose of ground coffee comprises the steps of:

- correcting the calculation of the weight of the dose of coffee by means of a correction algorithm based on harmonic analysis associated with the grinding means (30) and the weight apparatus (300);

- continuously comparing the calculated weight values with a reference weight value (Pp);
- generating a stop signal of the grinding means (30) if the calculated weight is equal to the reference weight value (Pp);
- memorising the activation time of the grinding element (30) for each dose of coffee dispensed.

17. Method for dispensing a dose of ground coffee according to claim 16, wherein the method comprises a step of controlling the dispensed ground coffee, the controlling step comprising the steps of:

   a) calculating a median time value (Tc) of the stored activation time values;
   b) comparing the median time value (Tc) to a default time value (Tp) associated with the dispensing of the dose of ground coffee having the reference weight value (Pp);
   c) generating a control signal of the grinding element (30) if the median time value (Tc) differs from the default time value and falls within a first control interval (I1) associated with the default time value (Tp) and a first error value (E1);
   d) generating a control signal of the grinding apparatus (1) if the median time value (Tc) exits the first interval (I1) and falls within a second control interval (I2) associated with the default time value (Tp) and a second error value (E1) greater than the first error value (E1);
   e) modifying grinding parameters of the grinding means (30) as a function of the control signal of the grinding means (30) and monitoring the grinding apparatus (1) based on the control signal of the grinding apparatus (1).

18. Method for dispensing a dose of ground coffee according to claim 11, wherein:

   - the step of activating the grinding means (30) is based on the weight of the dose of ground coffee dispensed and provides for the detection of a number of motor rpm for each dispensing;
   - the step of calculating the weight of the dose of ground coffee comprises the steps of:

      - correcting the calculation of the weight of the dose of coffee by means of a correction algorithm based on harmonic analysis associated with the grinding means (30) and the weighing apparatus (300);

      - continuously comparing the calculated weight values with a reference weight value (Pp);
      - generating a stop signal of the grinding means (30) if the calculated weight is equal to the reference weight value (Pp);
      - memorising the number of motor rpm of the grinding means (30) for each dispensing.

19. Method for dispensing a dose of ground coffee according to claim 18, wherein the method comprises a step of controlling the dispensed ground coffee, the controlling step comprising the steps of:

   a) calculating a median engine rpm value of the engine rpm values memorised;
   b) comparing the median engine rpm value (Nc) with a default engine rpm value (Np) associated with the dispensing of the dose of ground coffee having the reference weight value (Pp);
   c) generating a control signal of the grinding means (30) if the median time value (Tc) differs from the default value of the number of engine rpm (Np) and falls within a first control range (I1) associated with the default value of number of engine rpm (Np) and a first error value (E1);
   d) generating a control signal of the grinding apparatus (1) if the median value of the number of engine rpm (Nc) exits the first interval (I1) and falls within a second control interval (I2) associated with the default value of the number of engine revolutions (Np) and a second error value (E1) greater than the first error value (E1);
   e) modifying grinding parameters of the grinding means (30) based on the control signal of the grinding means (30) and monitoring the grinding apparatus (1) based on the control signal of the grinding apparatus (1).

20. A kit for weighing a grinding assembly (100) of a coffee bean grinding apparatus (1) of a coffee machine or a grinder, said weighing kit being associated with the coffee bean grinding apparatus (1) and comprising:

   - a weighing body (310) mountable on a support frame (200) of the coffee bean grinding apparatus (1) and configured to connect the grinding assembly (100) to the support frame (200) by suspending the grinding assembly (100);
   - weight detection sensors (320) associable with the weighing body (310) and configured to generate measurement signals representative of the weight of the grinding assembly (100) at successive time intervals;
   - an electronic control unit (330) connectable in signal communication with the weight detection sensors (320) to receive the measurement signals and calculate a weight signal representative of the weight of ground coffee dispensed from the grinding assembly (100) according to the measurement signals received.

**Patentansprüche**

1. Kaffeebohnenmahlvorrichtung (1), umfassend:

   - eine Mahlbaugruppe (100), umfassend:

      - einen Vorratsbehälter (10), der zum Speichern von Kaffeebohnen konfiguriert ist;

- eine Mahlvorrichtung (20), die mit dem Vorratsbehälter (10) verbunden ist und Mahlmittel (30) umfasst, die dazu konfiguriert sind, vom Vorratsbehälter (10) empfangene Kaffeebohnen zu mahlen und gemahlenen Kaffee auszugeben;
- einen Ausgabekanal (40), der zum Ausgeben des gemahlenen Kaffees aus der Mahlbaugruppe (100) konfiguriuriert ist;

- einen Tragrahmen (200), der mit der Mahlbaugruppe (100) gekoppelt ist, um die Mahlbaugruppe (100) zu tragen;
- eine Wiegevorrichtung (300), die zum Messen des Gewichts des aus der Mahlbaugruppe (100) ausgegebenen gemahlenen Kaffees konfiguriert ist, und umfassend:

- einen Wiegekörper (310);
- Gewichtserfassungssensoren (320), die dem Wiegekörper (310) zugeordnet sind;
- eine elektronische Steuereinheit (330) in Signalkommunikation mit den Gewichtserfassungssensoren (320) zum Empfangen der Messsignale und Berechnen eines Gewichtssignals, das für das Gewicht des aus der Mahlbaugruppe (100) ausgegebenen gemahlenen Kaffees repräsentativ ist, basierend auf den empfangenen Messsignalen, **dadurch gekennzeichnet, dass**:

- der Wiegekörper (310) dazu konfiguriert ist, die Mahlbaugruppe (100) mit dem Tragrahmen (200) durch Aufhängen der Mahlbaugruppe (100) zu verbinden;
- die Gewichtserfassungssensoren (320) dazu konfiguriert sind, Messsignale zu erzeugen, die für das Gewicht der Mahlbaugruppe (100) in aufeinanderfolgenden Zeitintervallen repräsentativ sind.

2. Kaffeebohnenmahlvorrichtung (1) nach Anspruch 1, wobei die Wiegevorrichtung (300) zwischen der Mahlbaugruppe (100) und dem Tragrahmen (200) zwischengeschaltet ist.

3. Kaffeebohnenmahlvorrichtung (1) nach Anspruch 1 oder 2, wobei der Wiegekörper (310) umfasst:

- Stützelemente (311), die einen Stützumfang (312) definieren, um die Mahlbaugruppe (100) am Tragrahmen (200) zu halten;
- Kopplungselemente (313), die zum Verbinden der Stützelemente (311) mit dem Tragrahmen (200) konfiguriert sind, wobei die Gewichtserfassungssensoren (320) den Stützelementen (311) und/oder den Kopplungselementen (313) zugeordnet sind.

4. Kaffeebohnenmahlvorrichtung (1) nach Anspruch 3, wobei die Stützelemente (311) eine Stützplatte (314) definieren, wobei die Kopplungselemente (313) jeweils von der Stützplatte (314) zur Befestigung am Tragrahmen (200) vorstehen.

5. Kaffeebohnenmahlvorrichtung (1) nach Anspruch 3 oder 4, wobei die Kopplungselemente (313) von den Stützelementen (311) vorstehen, wobei sich jedes Kopplungselement (313) von einem ersten Ende (313a), das dem relativen Stützelement (311) zugeordnet ist, zu einem zweiten Ende (313b) erstreckt, um das Stützelement (311) am Tragrahmen (200) zu befestigen, wobei die Gewichtserfassungssensoren (320) zwischen dem ersten Ende (313a) und dem zweiten Ende (313b) eines oder mehrerer Kopplungselemente (313) angeordnet sind.

6. Kaffeebohnenmahlvorrichtung (1) nach Anspruch 5, wobei jedes Kopplungselement (313) eine Verengung (315) zwischen dem ersten Ende (313a) und dem zweiten Ende (313b) aufweist, wobei die Gewichtserfassungssensoren (320) an der Verengung (315) angeordnet sind.

7. Kaffeebohnenmahlvorrichtung (1) nach einem der Ansprüche 1 bis 6, wobei die Kaffeebohnenmahlvorrichtung (1) eine Verbindungsplatte (400) umfasst, die zwischen der Mahlbaugruppe (100) und dem Wiegekörper (300) zwischengeschaltet ist, wobei die Verbindungsplatte (400) an der Mahlbaugruppe (100) befestigt und dazu konfiguriert ist, die Mahlbaugruppe (100) mit dem Wiegekörper (300) zu verbinden.

8. Kaffeebohnenmahlvorrichtung (1) nach Anspruch 7, wobei die Verbindungsplatte (400) Verbindungsmittel (410) umfasst, die dazu konfiguriert sind, die Verbindungsplatte (400) lösbar am Wiegekörper (300) zu befestigen.

9. Kaffeebohnenmahlvorrichtung (1) nach einem der Ansprüche 1 bis 7, wobei die Gewichtserfassungssensoren (320) Dehnungsmessstreifen (321) umfassen.

10. Kaffeebohnenmahlvorrichtung (1) nach einem der Ansprüche 1 bis 9, wobei die elektronische Steuereinheit (330) dazu konfiguriert ist, das Gewicht des aus der Mahlbaugruppe (100) ausgegebenen gemahlenen Kaffees durch Berechnen der Differenz zwischen zwei Messsignalen, die aufeinanderfolgenden Zeitintervallen zugeordnet sind, zu berechnen.

11. Verfahren zum Ausgeben einer Dosis gemahlenen Kaffees aus der Kaffeebohnenmahlvorrichtung (1) nach einem der Ansprüche 1 bis 10, wobei das Verfahren die folgenden Schritte umfasst:

- Erfassen des Gewichts der Mahlbaugruppe (100) unter Verwendung der Wiegevorrichtung und Erzeugen eines ersten Messsignals, das für das Gewicht der Mahlbaugruppe (100) vor der Aktivierung der Mahlmittel (30) repräsentativ ist;
- Aktivieren der Mahlmittel (30), um eine Dosis gemahlenen Kaffees aus der Mahlbaugruppe (100) auszugeben;
- Erfassen des Gewichts der Mahlbaugruppe (100) unter Verwendung der Wiegevorrichtung und Erzeugen eines zweiten Messsignals, das für das Gewicht der Mahlbaugruppe (100) basierend auf dem ausgegebenen gemahlenen Kaffee repräsentativ ist;
- Berechnen des Gewichts der Dosis des gemahlenen Kaffees basierend auf der Differenz zwischen dem ersten Messsignal und dem zweiten Messsignal.

12. Verfahren zum Ausgeben einer Dosis gemahlenen Kaffees nach Anspruch 11, wobei:

- der Schritt des Aktivierens der Mahlmittel (30) eine Funktion der Betriebszeitdauer der Mahlmittel (30) ist und ein Anhalten der Mahlmittel (30) als eine Funktion der Betriebszeitdauer vorsieht;
- der Schritt des Berechnens des Gewichts der Dosis des gemahlenen Kaffees den Schritt des Berechnens eines Produktivitätswerts für jede ausgegebene Dosis gemahlenen Kaffees als das Verhältnis des Gewichts der Dosis des gemahlenen Kaffees zur Betriebszeitdauer einschließt.

13. Verfahren zum Ausgeben einer Dosis gemahlenen Kaffees nach Anspruch 12, wobei das Verfahren einen Schritt des Steuerns des ausgegebenen gemahlenen Kaffees umfasst, wobei der Steuerschritt die folgenden Schritte umfasst:

a) Berechnen eines Medianwerts der Produktivität (Mc) des berechneten Produktivitätswerts;
b) Vergleichen des Medianwerts der Produktivität (Mc) mit einem Standardwert der Produktivität (Mp);
c) Erzeugen eines Steuersignals des Mahlelements (30), wenn der Medianwert der Produktivität (Mc) vom Standardwert der Produktivität (Mp) abweicht und in einen ersten Steuerbereich (I1) fällt, der dem Standardwert der Produktivität (Mp) und einem ersten Fehlerwert (E1) zugeordnet ist;
d) Erzeugen eines Steuersignals der Mahlvorrichtung (1), wenn der Medianwert der Produktivität (Mc) den ersten Bereich (I1) verlässt und in einen zweiten Steuerbereich (I2) fällt, der dem Standardwert der Produktivität (Mp) und einem zweiten Fehlerwert (E2), der größer als der erste Fehlerwert (E1) ist, zugeordnet ist;
e) Modifizieren von Mahlparametern des Mahlelements (30) gemäß dem Steuersignal der Mahlmittel (30) und Überwachen der Mahlvorrichtung (1) gemäß dem Steuersignal der Mahlvorrichtung (1).

14. Verfahren zum Ausgeben einer Dosis gemahlenen Kaffees nach Anspruch 11, wobei:

- der Schritt des Aktivierens der Mahlmittel (30) auf einer Aktivierungszeitdauer der Mahlmittel (30) basiert, um eine spezifische Dosis gemahlenen Kaffees auszugeben, die einem Referenzgewichtswert (Pp) zugeordnet ist, wobei die Phase des Aktivierens der Mahlmittel (30) vorsieht, die Mahlmittel gemäß der Aktivierungszeitdauer abzuschalten.

15. Verfahren zum Ausgeben einer Dosis gemahlenen Kaffees nach Anspruch 14, wobei das Verfahren einen Schritt des Steuerns des ausgegebenen gemahlenen Kaffees umfasst, wobei der Steuerschritt die folgenden Schritte umfasst:

a) Berechnen eines medianen Gewichtswerts (Pc) der berechneten Gewichtswerte;
b) Vergleichen des medianen Gewichtswerts (Pc) mit dem Referenzgewichtswert (Pp);
c) Erzeugen eines Steuersignals der Mahlmittel (30), wenn der mediane Gewichtswert (Pc) vom Referenzgewichtswert (Pp) abweicht und in einen ersten Steuerbereich (I1) fällt, der dem Referenzgewichtswert (Pp) und einem ersten Fehlerwert (E1) zugeordnet ist;
d) Erzeugen eines Steuersignals der Mahlvorrichtung (1), wenn der mediane Gewichtswert (Pc) den ersten Steuerbereich (I1) verlässt und in einen zweiten Steuerbereich (I2) fällt, der dem Referenzgewichtswert (Pp) und einem zweiten Fehlerwert (E2), der größer als der erste Fehlerwert (E1) ist, zugeordnet ist;
e) Modifizieren von Mahlparametern des Mahlelements (30) basierend auf dem Steuersignal der Mahlmittel (30) und Überwachen des Mahlwerks (1) basierend auf dem Steuersignal der Mahlvorrichtung (1).

16. Verfahren zum Ausgeben einer Dosis gemahlenen Kaffees nach Anspruch 11, wobei:

- der Schritt des Aktivierens der Mahlmittel (30) auf dem Gewicht der ausgegebenen Dosis gemahlenen Kaffees basiert und eine Aktivierungszeit der Mahlmittel für jede ausgegebene Dosis Kaffee vorsieht, die zeitlich zwischen einem Startzeitpunkt, der mit dem Aktivieren der Mahlmittel verbunden ist, und einem Endzeitpunkt, der mit dem Anhalten der Mahlmittel (30) verbunden ist, ausgedehnt ist;
- der Schritt des Berechnens des Gewichts der Dosis des gemahlenen Kaffees die folgenden Schritte umfasst:

    - Korrigieren der Berechnung des Gewichts der Dosis des Kaffees mittels eines Korrekturalgorithmus, der auf einer harmonischen Analyse basiert, die den Mahlmitteln (30) und der Wiegevorrichtung (300) zugeordnet ist;
    - kontinuierliches Vergleichen der berechneten Gewichtswerte mit einem Referenzgewichtswert (Pp);
    - Erzeugen eines Stoppsignals der Mahlmittel (30), wenn das berechnete Gewicht gleich dem Referenzgewichtswert (Pp) ist;
    - Speichern der Aktivierungszeit des Mahlelements (30) für jede Dosis des ausgegebenen Kaffees.

17. Verfahren zum Ausgeben einer Dosis gemahlenen Kaffees nach Anspruch 16, wobei das Verfahren einen Schritt des Steuerns des ausgegebenen gemahlenen Kaffees umfasst, wobei der Steuerschritt die folgenden Schritte umfasst:

    a) Berechnen eines medianen Zeitwerts (Tc) der gespeicherten Aktivierungszeitwerte;
    b) Vergleichen des medianen Zeitwerts (Tc) mit einem Standardzeitwert (Tp), der der Ausgabe der Dosis gemahlenen Kaffees mit dem Referenzgewichtswert (Pp) zugeordnet ist;
    c) Erzeugen eines Steuersignals des Mahlelements (30), wenn der mediane Zeitwert (Tc) vom Standardzeitwert abweicht und in einen ersten Steuerbereich (I1) fällt, der dem Standardzeitwert (Tp) und einem ersten Fehlerwert (E1) zugeordnet ist;
    d) Erzeugen eines Steuersignals der Mahlvorrichtung (1), wenn der mediane Zeitwert (Tc) den ersten Bereich (I1) verlässt und in einen zweiten Steuerbereich (I2) fällt, der dem Standardzeitwert (Tp) und einem zweiten Fehlerwert (E1), der größer als der erste Fehlerwert ist, zugeordnet ist;
    e) Modifizieren von Mahlparametern der Mahlmittel (30) in Abhängigkeit vom Steuersignal der Mahlmittel (30) und Überwachen der Mahlvorrichtung (1) basierend auf dem Steuersignal der Mahlvorrichtung (1).

18. Verfahren zum Ausgeben einer Dosis gemahlenen Kaffees nach Anspruch 11, wobei:

- der Schritt des Aktivierens der Mahlmittel (30) auf dem Gewicht der ausgegebenen Dosis gemahlenen Kaffees basiert und die Erfassung einer Anzahl von Motorumdrehungen pro Minute für jede Ausgabe vorsieht;
- der Schritt des Berechnens des Gewichts der Dosis des gemahlenen Kaffees die folgenden Schritte umfasst:

    - Korrigieren der Berechnung des Gewichts der Dosis des Kaffees mittels eines Korrekturalgorithmus, der auf einer harmonischen Analyse basiert, die den Mahlmitteln (30) und der Wiegevorrichtung (300) zugeordnet ist;
    - kontinuierliches Vergleichen der berechneten Gewichtswerte mit einem Referenzgewichtswert (Pp);
    - Erzeugen eines Stoppsignals der Mahlmittel (30), wenn das berechnete Gewicht gleich dem Referenzgewichtswert (Pp) ist;
    - Speichern der Anzahl der Motorumdrehungen pro Minute der Mahlmittel (30) für jede Ausgabe.

19. Verfahren zum Ausgeben einer Dosis gemahlenen Kaffees nach Anspruch 18, wobei das Verfahren einen Schritt des Steuerns des ausgegebenen gemahlenen Kaffees umfasst, wobei der Steuerschritt die folgenden Schritte umfasst:

    a) Berechnen eines medianen Motordrehzahlwerts der gespeicherten Motordrehzahlwerte;
    b) Vergleichen des medianen Motordrehzahlwerts (Nc) mit einem Standard-Motordrehzahlwert (Np), der der Ausgabe der Dosis gemahlenen Kaffees mit dem Referenzgewichtswert (Pp) zugeordnet ist;
    c) Erzeugen eines Steuersignals der Mahlmittel (30), wenn der mediane Zeitwert (Tc) vom Standardwert der Motordrehzahl (Np) abweicht und in einen ersten Steuerbereich (I1) fällt, der dem Standardwert der Motordrehzahl (Np) und einem ersten Fehlerwert (E1) zugeordnet ist;
    d) Erzeugen eines Steuersignals der Mahlvorrichtung (1), wenn der Medianwert der Motordrehzahl (Nc) den ersten Bereich (I1) verlässt und in einen zweiten Steuerbereich (I2) fällt, der dem Standardwert der Motorumdrehungen (Np) und einem zweiten Fehlerwert (E1), der größer als der erste Fehlerwert (E1) ist, zugeordnet ist;
    e) Modifizieren von Mahlparametern der Mahlmittel (30) basierend auf dem Steuersignal der Mahlmittel (30) und Überwachen der Mahlvorrichtung (1) basierend auf dem Steuersignal der Mahlvorrichtung (1).

20. Ein Bausatz zum Wiegen einer Mahlbaugruppe (100) einer Kaffeebohnenmahlvorrichtung (1) einer Kaffeemaschine oder eines Mahlwerks, wobei der Wiegebausatz der Kaffeebohnenmahlvorrichtung (1) zugeordnet ist und umfasst:

- einen Wiegekörper (310), der an einem Tragrahmen (200) der Kaffeebohnenmahlvorrichtung (1) montierbar und dazu konfiguriert ist, die Mahlbaugruppe (100) mit dem Tragrahmen (200) durch Aufhängen der Mahlbaugruppe (100) zu verbinden;
- Gewichtserfassungssensoren (320), die dem Wiegekörper (310) zuordenbar und dazu konfiguriert sind, Messsignale zu erzeugen, die für das Gewicht der Mahlbaugruppe (100) in aufeinanderfolgenden Zeitintervallen repräsentativ sind;
- eine elektronische Steuereinheit (330), die in Signalkommunikation mit den Gewichtserfassungssensoren (320) verbindbar ist, um die Messsignale zu empfangen und ein Gewichtssignal zu berechnen, das für das Gewicht des aus der Mahlbaugruppe (100) ausgegebenen gemahlenen Kaffees gemäß den empfangenen Messsignalen repräsentativ ist.

## Revendications

1. Appareil (1) de broyage de grains de café comprenant :

   - un ensemble de broyage (100), comprenant :
   - une trémie de stockage (10) configurée pour stocker des grains de café ;
   - un dispositif de broyage (20) raccordé à la trémie de stockage (10) et comprenant des moyens de broyage (30) configurés pour broyer des grains de café reçus de la trémie de stockage (10) et pour distribuer du café moulu ;

     - un conduit de distribution (40) configuré pour distribuer le café moulu à partir de l'ensemble de broyage (100) ;

   - un châssis de support (200) couplé à l'ensemble de broyage (100) pour supporter l'ensemble de broyage (100) ;
   - un appareil de pesée (300) configuré pour mesurer le poids du café moulu distribué à partir de l'ensemble de broyage (100) et comprenant :

     - un corps de pesée (310) ;
     - des capteurs de détection de poids (320) associés au corps de pesée (310) ;
     - une unité de commande électronique (330) en communication de signal avec les capteurs de détection de poids (320) pour recevoir les signaux de mesure et calculer un signal de poids représentatif du poids du café moulu distribué à partir de l'ensemble de broyage (100) en fonction des signaux de mesure reçus

   **caractérisé en ce que** :

   - le corps de pesée (310) est configuré pour raccorder l'ensemble de broyage (100) au châssis de support (200) en suspendant l'ensemble de broyage (100) ;
   - les capteurs de détection de poids (320) sont configurés pour générer des signaux de mesure représentatifs du poids de l'ensemble de broyage (100) à des intervalles de temps successifs.

2. Appareil de broyage de grains de café (1) selon la revendication 1, dans lequel l'appareil de pesée (300) est interposé entre l'ensemble de broyage (100) et le châssis de support (200).

3. Appareil de broyage de grains de café (1) selon la revendication 1 ou 2, dans lequel le corps de pesée (310) comprend :

   - des éléments de support (311) définissant un périmètre de support (312) pour maintenir l'ensemble de broyage (100) sur le châssis de support (200) ;
   - des éléments de couplage (313) configurés pour raccorder les éléments de support (311) au châssis de support (200), lesdits capteurs de détection de poids (320) étant associés aux éléments de support (311) et/ou aux éléments de couplage (313).

4. Appareil de broyage de grains de café (1) selon la revendication 3, dans lequel les éléments de support (311) définissent une plaque de support (314), lesdits éléments de couplage (313) faisant respectivement saillie depuis la plaque de support (314) pour une fixation au châssis de support (200).

5. Appareil de broyage de grains de café (1) selon la revendication 3 ou 4, dans lequel les éléments de couplage (313) font saillie depuis les éléments de support (311), chaque élément de couplage (313) s'étendant d'une première extrémité (313a) associée à l'élément de support (311) relatif à une seconde extrémité (313b) pour fixer l'élément de support (311) au châssis de support (200), lesdits capteurs de détection de poids (320) étant agencés entre la première extrémité (313a) et la seconde extrémité (313b) d'un ou plusieurs éléments de couplage (313).

**6.** Appareil de broyage de grains de café (1) selon la revendication 5, dans lequel chaque élément de couplage (313) présente un rétrécissement (315) entre la première extrémité (313a) et la seconde extrémité (313b), lesdits capteurs de détection de poids (320) étant agencés au niveau du rétrécissement (315).

**7.** Appareil de broyage de grains de café (1) selon l'une quelconque des revendications 1 à 6, dans lequel l'appareil de broyage de grains de café (1) comprend une plaque de raccordement (400) interposée entre l'ensemble de broyage (100) et le corps de pesée (300), ladite plaque de raccordement (400) étant fixée à l'ensemble de broyage (100) et configurée pour raccorder l'ensemble de broyage (100) au corps de pesée (300).

**8.** Appareil de broyage de grains de café (1) selon la revendication 7, dans lequel la plaque de raccordement (400) comprend des moyens de raccordement (410) configurés pour fixer de manière amovible la plaque de raccordement (400) au corps de pesée (300).

**9.** Appareil de broyage de grains de café (1) selon l'une quelconque des revendications 1 à 7, dans lequel les capteurs de détection de poids (320) comprennent des jauges de contrainte (321).

**10.** Appareil de broyage de grains de café (1) selon l'une quelconque des revendications 1 à 9, dans lequel l'unité de commande électronique (330) est configurée pour calculer le poids du café moulu distribué à partir de l'ensemble de broyage (100) en calculant la différence entre deux signaux de mesure associés à des intervalles de temps successifs.

**11.** Procédé de distribution d'une dose de café moulu à partir de l'appareil de broyage de grains de café (1) selon l'une quelconque des revendications 1 à 10, le procédé comprenant les étapes consistant à :

- détecter le poids de l'ensemble de broyage (100) en utilisant l'appareil de pesée et générer un premier signal de mesure représentatif du poids de l'ensemble de broyage (100) avant l'activation des moyens de broyage (30) ;
- activer les moyens de broyage (30) pour distribuer une dose de café moulu à partir de l'ensemble de broyage (100) ;
- détecter le poids de l'ensemble de broyage (100) en utilisant l'appareil de pesée et générer un second signal de mesure représentatif du poids de l'ensemble de broyage (100) sur la base du café moulu distribué ;
- calculer le poids de la dose de café moulu sur la base de la différence entre le premier signal de mesure et le second signal de mesure.

**12.** Procédé de distribution d'une dose de café moulu selon la revendication 11, dans lequel :

- l'étape d'activation des moyens de broyage (30) est fonction de la durée de fonctionnement des moyens de broyage (30) et prévoit l'arrêt des moyens de broyage (30) en fonction de la durée de fonctionnement ;
- l'étape de calcul du poids de la dose de café moulu inclut l'étape de calcul d'une valeur de productivité pour chaque dose de café moulu distribuée comme le rapport du poids de la dose de café moulu sur la durée de fonctionnement.

**13.** Procédé de distribution d'une dose de café moulu selon la revendication 12, dans lequel le procédé comprend une étape de commande du café moulu distribué, l'étape de commande comprenant les étapes consistant à :

a) calculer une valeur médiane de productivité (Mc) de la valeur de productivité calculée ;
b) comparer la valeur médiane de productivité (Mc) avec une valeur par défaut de productivité (Mp) ;
c) générer un signal de commande de l'élément de broyage (30) si la valeur médiane de productivité (Mc) diffère de la valeur par défaut de productivité (Mp) et se situe dans une première plage de commande (I1) associée à la valeur par défaut de productivité (Mp) et à une première valeur d'erreur (E1) ;
d) générer un signal de commande de l'appareil de broyage (1) si la valeur médiane de productivité (Mc) sort de la première plage (I1) et se situe dans une seconde plage de commande (I2) associée à la valeur par défaut de productivité (Mp) et à une seconde valeur d'erreur (E2) supérieure à la première valeur d'erreur (E1) ;
e) modifier les paramètres de broyage de l'élément de broyage (30) selon le signal de commande des moyens de broyage (30) et surveiller l'appareil de broyage (1) selon le signal de commande de l'appareil de broyage (1).

**14.** Procédé de distribution d'une dose de café moulu selon la revendication 11, dans lequel :

- l'étape d'activation des moyens de broyage (30) est basée sur une durée d'activation des moyens de broyage (30) pour distribuer une dose spécifique de café moulu associée à une valeur de poids de référence (Pp), ladite phase d'activation des moyens de broyage (30) prévoyant de désactiver les moyens de broyage selon la durée d'activation.

**15.** Procédé de distribution d'une dose de café moulu selon la revendication 14, dans lequel le procédé comprend une étape de commande du café moulu distribué, l'étape de commande comprenant les étapes consistant à :

    a) calculer une valeur de poids médiane (Pc) des valeurs de poids calculées ;
    b) comparer la valeur de poids médiane (Pc) avec la valeur de poids de référence (Pp) ;
    c) générer un signal de commande des moyens de broyage (30) si la valeur de poids médiane (Pc) diffère de la valeur de poids de référence (Pp) et se situe dans une première plage de commande (I1) associée à la valeur de poids de référence (Pp) et à une première valeur d'erreur (E1) ;
    d) générer un signal de commande de l'appareil de broyage (1) si la valeur de poids médiane (Pc) sort de la première plage de commande (I1) et se situe dans une seconde plage de commande (I2) associée à la valeur de poids de référence (Pp) et à une seconde valeur d'erreur (E2) supérieure à la première valeur d'erreur (E1) ;
    e) modifier les paramètres de broyage de l'élément de broyage (30) sur la base du signal de commande des moyens de broyage (30) et surveiller le moulin à broyer (1) sur la base du signal de commande de l'appareil de broyage (1).

**16.** Procédé de distribution d'une dose de café moulu selon la revendication 11, dans lequel :

    - l'étape d'activation des moyens de broyage (30) est basée sur le poids de la dose de café moulu distribuée et prévoit une durée d'activation des moyens de broyage pour chaque dose de café distribuée étendue temporellement entre un instant de début associé à l'activation des moyens de broyage et un instant de fin associé à l'arrêt des moyens de broyage (30) ;
    - l'étape de calcul du poids de la dose de café moulu comprend les étapes consistant à :

        - corriger le calcul du poids de la dose de café au moyen d'un algorithme de correction basé sur une analyse harmonique associée aux moyens de broyage (30) et à l'appareil de pesée (300) ;
        - comparer en continu les valeurs de poids calculées avec une valeur de poids de référence (Pp) ;
        - générer un signal d'arrêt des moyens de broyage (30) si le poids calculé est égal à la valeur de poids de référence (Pp) ;
        - mémoriser la durée d'activation de l'élément de broyage (30) pour chaque dose de café distribuée.

**17.** Procédé de distribution d'une dose de café moulu selon la revendication 16, dans lequel le procédé comprend une étape de commande du café moulu distribué, l'étape de commande comprenant les étapes consistant à :

    a) calculer une valeur de temps médiane (Tc) des valeurs de temps d'activation mémorisées;
    b) comparer la valeur de temps médiane (Tc) à une valeur de temps par défaut (Tp) associée à la distribution de la dose de café moulu ayant la valeur de poids de référence (Pp) ;
    c) générer un signal de commande de l'élément de broyage (30) si la valeur de temps médiane (Tc) diffère de la valeur de temps par défaut et se situe dans une première plage de commande (I1) associée à la valeur de temps par défaut (Tp) et à une première valeur d'erreur (E1) ;
    d) générer un signal de commande de l'appareil de broyage (1) si la valeur de temps médiane (Tc) sort de la première plage (I1) et se situe dans une seconde plage de commande (I2) associée à la valeur de temps par défaut (Tp) et à une seconde valeur d'erreur (E1) supérieure à la première valeur d'erreur (E1) ;
    e) modifier les paramètres de broyage des moyens de broyage (30) en fonction du signal de commande des moyens de broyage (30) et surveiller l'appareil de broyage (1) sur la base du signal de commande de l'appareil de broyage (1).

**18.** Procédé de distribution d'une dose de café moulu selon la revendication 11, dans lequel :

    - l'étape d'activation des moyens de broyage (30) est basée sur le poids de la dose de café moulu distribuée et prévoit la détection d'un nombre de tours/minute du moteur pour chaque distribution ;
    - l'étape de calcul du poids de la dose de café moulu comprend les étapes consistant à :

        - corriger le calcul du poids de la dose de café au moyen d'un algorithme de correction basé sur une analyse harmonique associée aux moyens de broyage (30) et à l'appareil de pesée (300) ;
        - comparer en continu les valeurs de poids calculées avec une valeur de poids de référence (Pp) ;
        - générer un signal d'arrêt des moyens de broyage (30) si le poids calculé est égal à la valeur de poids de référence (Pp) ;
        - mémoriser le nombre de tours/minute du moteur des moyens de broyage (30) pour chaque distribution.

**19.** Procédé de distribution d'une dose de café moulu selon la revendication 18, dans lequel le procédé comprend une étape de commande du café moulu distribué, l'étape de commande comprenant les étapes consistant à :

a) calculer une valeur médiane de tours/minute du moteur des valeurs de tours/minute du moteur mémorisées ;

b) comparer la valeur médiane de tours/minute du moteur (Nc) avec une valeur par défaut de tours/minute du moteur (Np) associée à la distribution de la dose de café moulu ayant la valeur de poids de référence (Pp) ;

c) générer un signal de commande des moyens de broyage (30) si la valeur de temps médiane (Tc) diffère de la valeur par défaut du nombre de tours/minute du moteur (Np) et se situe dans une première plage de commande (I1) associée à la valeur par défaut du nombre de tours/minute du moteur (Np) et à une première valeur d'erreur (E1) ;

d) générer un signal de commande de l'appareil de broyage (1) si la valeur médiane du nombre de tours/minute du moteur (Nc) sort de la première plage (I1) et se situe dans une seconde plage de commande (I2) associée à la valeur par défaut du nombre de révolutions du moteur (Np) et à une seconde valeur d'erreur (E1) supérieure à la première valeur d'erreur (E1) ;

e) modifier les paramètres de broyage des moyens de broyage (30) sur la base du signal de commande des moyens de broyage (30) et surveiller l'appareil de broyage (1) sur la base du signal de commande de l'appareil de broyage (1).

**20.** Kit de pesée pour un ensemble de broyage (100) d'un appareil de broyage de grains de café (1) d'une machine à café ou d'un broyeur, ledit kit de pesée étant associé à l'appareil de broyage de grains de café (1) et comprenant :

- un corps de pesée (310) montable sur un châssis de support (200) de l'appareil de broyage de grains de café (1) et configuré pour raccorder l'ensemble de broyage (100) au châssis de support (200) en suspendant l'ensemble de broyage (100) ;

- des capteurs de détection de poids (320) associables au corps de pesée (310) et configurés pour générer des signaux de mesure représentatifs du poids de l'ensemble de broyage (100) à des intervalles de temps successifs ;

- une unité de commande électronique (330) connectable en communication de signal avec les capteurs de détection de poids (320) pour recevoir les signaux de mesure et calculer un signal de poids représentatif du poids de café moulu distribué depuis l'ensemble de broyage (100) selon les signaux de mesure reçus.

Fig. 1

Fig. 2

Fig. 3

Fig. 4

Fig. 5

Fig. 6

Fig. 7

Fig. 8

**EP 4 278 934 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015006244 A1
- ES 2574537 A1
- EP 3424379 A
- EP 3167782 A1

- WO 2015006244 A
- ES 2574537
- EP 3167782 A